# EUROPEAN PATENT APPLICATION

(11) **EP 4 510 372 A1**
(43) Date of publication of application: **19.02.2025**
(21) Application number: 22958500.5
(22) Date of filing: 16.09.2022
(51) Int. Cl.: H01M 50/593, H01M 50/15

(54) **BATTERY CELL, BATTERY AND ELECTRIC DEVICE**

(71) Applicant: Contemporary Amperex Technology Co., Limited, Ningde, Fujian 352100 (CN)
(72) Inventor: ZHOU, Wenlin, Ningde, Fujian 352100 (CN); LIU, Wenzhong, Ningde, Fujian 352100 (CN); LI, Quankun, Ningde, Fujian 352100 (CN); WANG, Peng, Ningde, Fujian 352100 (CN); YANG, Kaihuan, Ningde, Fujian 352100 (CN)
(74) Representative: Ran, Handong
(86) International application number: PCT/CN2022/119418
(87) International publication number: WO 2024/055310

(57) **Abstract**

The present application relates to the field of batteries, and provides a battery cell, a battery and an electric device. The battery cell comprises a housing, an electrode assembly, an end cover assembly and a supporting member. The housing is provided with an opening. The electrode assembly is provided with a main body part and tabs protruding out of the main body part, and the electrode assembly is accommodated in the housing. The end cover assembly seals the opening. The supporting member is located between the end cover assembly and the main body part. The supporting member comprises a supporting body and hooking fastening parts, and, in the thickness direction of the end cover assembly, the supporting body is provided with a first surface facing the end cover assembly and a second surface facing away from the end cover assembly. The hooking fastening parts are arranged on the supporting body, and the hooking fastening parts are in hooked and fastened fit with the end cover assembly. The hooking fastening parts are located between the first surface and the second surface. **In** the battery cell, the supporting member is arranged between the end cover assembly and the main body part, so that the tabs can be protected, making the tabs not prone to splitting and inward insertion, thereby improving the safety of the battery cell. Moreover, the supporting member occupies a relatively small space in the thickness direction of the end cover assembly, helping to improve the energy density of the battery cell.

## Description

### Technical Field

The present application relates to the field of batteries, and in particular, to a battery cell, a battery, and an electrical device.

### Background Art

Batteries are widely used in the field of new energy, such as electric vehicles and new energy vehicles, which have become a new trend in the development of the automotive industry. The development of battery technology needs to consider various design factors simultaneously, such as energy density, cycle life, discharge capacity, charge and discharge rate, and other performance parameters. In addition, safety of batteries should also be considered. However, in scenarios where battery cells are inverted, safety of the battery cells is poor.

### Summary

Embodiments of the present application aim to provide a battery cell, a battery, and an electrical device to solve a problem of poor safety of the battery cell in a scenario that the battery cell is inverted in related technologies.

In a first aspect, an embodiment of the present application provides a battery cell, which includes a shell, an electrode assembly, an end cover assembly, and a support member, where the shell has an opening; the electrode assembly has a main body and a tab protruding from the main body, and the electrode assembly is accommodated in the shell; the end cover assembly closes the opening; and the support member is located between the end cover assembly and the main body, the support member includes a support body and a buckle portion, the support body has a first surface facing the end cover assembly and a second surface away from the end cover assembly in a thickness direction of the end cover assembly, the buckle portion is disposed on the support body, the buckle portion is in buckle fit with the end cover assembly, and the buckle portion is located between the first surface and the second surface.

In the foregoing technical solution, the support member is disposed between the end cover assembly and the main body of the battery cell, and in a scenario where the battery cell is inverted, the support member can support the electrode assembly, so that gravity of the main body of the electrode assembly is less prone to transmission to the tab to cause bifurcation and insertion of the tab, thereby improving safety of the battery cell. The support body is connected to the end cover assembly through the buckle portion, so that the support member will not move up and down inside the shell and will not hit the electrode assembly to damage the electrode assembly. The buckle portion is disposed between the first surface and the second surface to reduce volume occupation in the thickness direction of the end cover assembly, which is beneficial to increasing an energy density of the battery cell. Further, the buckle portion does not extend beyond the first surface or the second surface, so that the buckle portion is less susceptible to external force and fracture in a production process. When materials are piled, a plurality of support members are laminated, and the buckle portion does not exceed beyond the first surface or the second surface, so that the first surface of one support member can fit onto the second surface of the other support member. In this case, the contact area of two support members is larger, which is conducive to stably piling the materials. In addition, as the buckle portion is disposed between the first surface and the second surface, compared with a situation that the buckle portion extends beyond the first surface or the second surface, the two adjacent support members are unlikely to hook each other during piling, and the other support member will not be pulled when one support member is fetched, thereby improving production safety and efficiency.

As an optional technical solution of the embodiments of the present application, the second surface abuts against the main body.

In the foregoing technical solution, the second surface abuts against the main body, so that relative positions of the support body and the main body will not change in a process of switching the battery cell from upright to inverted, the main body will not collide with the support body, the electrode assembly is less likely to damage, and the service life of the battery cell can be prolonged accordingly.

As an optional technical solution of the embodiments of the present application, the tab is bent around the support body.

In the foregoing technical solution, by bending the tab of the electrode assembly around the support body, the gravity of the main body of the electrode assembly is less prone to transmission to the tab in the scenario where the battery cell is inverted, and bifurcation and insertion of the tab are not easily caused, thereby improving the safety of the battery cell.

As an optional technical solution of the embodiments of the present application, the support body includes a body portion and a protruding portion, the tab is bent around the body portion, the protruding portion protrudes from a side of the body portion away from the end cover assembly in the thickness direction, a surface of the protruding portion away from the end cover assembly is the second surface, and a surface of the body portion facing the end cover assembly is the first surface.

In the foregoing technical solution, the protruding portion protruding towards the main body is formed on the body portion, so that the protruding portion abuts against the main body, and the protruding portion can increase the strength of the support body to improve the support ability of the support body. Meanwhile, the body portion is relatively thin, which facilitates the bending of the tab around the body portion.

As an optional technical solution of the embodiments of the present application, the protruding portion includes a main convex portion and side convex portions, a plurality of side convex portions are disposed on at least one side of the main convex portion in a width direction of the end cover assembly, the plurality of side convex portions are arranged at intervals in a length direction of the end cover assembly, and an accommodating space for accommodating the tab is formed between the two adjacent side convex portions.

In the foregoing technical solution, the accommodating space for accommodating the tab is formed between the two adjacent side convex portions, so that the tab is unlikely to interfere with the support member and can be smoothly bent around the body portion, and the tab is unlikely to damage. Meanwhile, the main convex portion and the side convex portions can protect the tab and reduce the possibility of damage of the tab in contact with other components, thereby improving the safety and service life of the battery cell.

As an optional technical solution of the embodiments of the present application, the buckle portion is disposed on at least one of the side convex portions.

In the foregoing technical solution, the buckle portion is disposed on the side convex portion, which skillfully uses the height of the side convex portion protruding from the body portion, so that the buckle portion can be hidden between the first surface and the second surface to reduce the space occupation of the support member in the thickness direction of the end cover and increase the energy density.

As an optional technical solution of the embodiment of the present application, the main convex portion has a first end and a second end that are opposite in the length direction, and the side convex portion is disposed at the first end and/or the second end; and the side convex portion located at the first end and/or the second end is provided with the buckle portion.

In the foregoing technical solution, the buckle portion is disposed on the side convex portion at the first end and/or the second end to facilitate the buckle fit between the buckle portion and the end cover assembly during assembly.

As an optional technical solution of the embodiments of the present application, the side convex portion at the first end is a first convex portion, and the side convex portion at the second end is a second convex portion; a first blocking member is further disposed at the first end, and the first blocking member extends beyond the buckle portion disposed on the first convex portion in a direction from the second end to the first end; and/or a second blocking member is further disposed at the second end, and the second blocking member extends beyond the buckle portion disposed on the second convex portion in a direction from the first end to the second end.

In the foregoing technical solution, the first blocking member is disposed at the first end, and the first blocking member extends beyond the buckle portion disposed at the first convex portion in the direction from the second end to the first end, so that when the support member collides with other components in the direction from the second end to the first end, the first blocking member is prone to collision with other components first, which can reduce the possibility of collision with the buckle portion to some extent and reduce the possibility of damage to the buckle portion. Similarly, the second blocking member is disposed at the second end, and the second blocking member extends beyond the buckle portion disposed on the second convex portion in the direction from the first end to the second end, so that when the support member collides with other components in the direction from the first end to the second end, the second blocking member is prone to collision with other components first, which can reduce the possibility of collision with the buckle portion to some extent and reduce the possibility of damage to the buckle portion.

As an optional technical solution of the embodiments of the present application, an abutting portion is disposed on the first blocking member and/or the second blocking member, and the abutting portion abuts against the end cover assembly in the thickness direction.

In the foregoing technical solution, the abutting portion abuts against the end cover assembly, so that the support body cannot move from the main body to the end cover assembly in the thickness direction, the support body is better limited, and the support body is prevented from moving to damage the electrode assembly.

As an optional technical solution of the embodiments of the present application, a plurality of side convex portions are disposed on two sides of the main convex portion in the width direction.

In the foregoing technical solution, the plurality of side convex portions are disposed on the two sides of the main convex portion in the width direction to form a plurality of accommodating spaces for accommodating the tabs, which facilitates the bending of the tabs around the body portion from the two sides of the main convex portion in the width direction.

As an optional technical solution of the embodiments of the present application, the buckle portion is disposed on at least one end of the support body in the length direction of the end cover assembly.

In the foregoing technical solution, the buckle portion is disposed on at least one end of the support body in the length direction of the end cover assembly, which facilitates the buckle fit between the buckle portion and the end cover assembly during assembly.

As an optional technical solution of the embodiments of the present application, the support body has a first end and a second end that are opposite in the length direction, and the buckle portions are disposed at the first end and the second end; a first blocking member is further disposed at the first end, and the first blocking member extends beyond the buckle portion disposed at the first end in a direction from the second end to the first end; and/or a second blocking member is further disposed at the second end, and the second blocking member extends beyond the buckle portion disposed at the second end in a direction from the first end to the second end.

In the foregoing technical solution, the first blocking member is disposed at the first end, and the first blocking member extends beyond the buckle portion disposed at the first convex portion in the direction from the second end to the first end, so that when the support member collides with other components in the direction from the second end to the first end, the first blocking member is prone to collision with other components first, which can reduce the possibility of collision with the buckle portion to some extent and reduce the possibility of damage to the buckle portion. Similarly, the second blocking member is disposed at the second end, and the second blocking member extends beyond the buckle portion disposed on the second convex portion in the direction from the first end to the second end, so that when the support member collides with other components in the direction from the first end to the second end, the second blocking member is prone to collision with other components first, which can reduce the possibility of collision with the buckle portion to some extent and reduce the possibility of damage to the buckle portion.

As an optional technical solution of the embodiments of the present application, a first concave portion is disposed on a side of the end cover assembly facing the electrode assembly, and the support member is at least partially accommodated in the first concave portion.

In the foregoing technical solution, the first concave portion is formed on the side of the end cover assembly facing the electrode assembly, and the support member is at least partially accommodated in the first concave portion, which are beneficial to increasing the energy density.

As an optional technical solution of the embodiments of the present application, there is a gap between the portion, accommodated in the first concave portion, of the support member and a side wall surface of the first concave portion, and the gap is used for movement of the support member relative to the end cover assembly.

In the foregoing technical solution, there is the gap between the portion, accommodated in the first concave portion, of the support member and the side wall surface of the first concave portion, and the gap enables the support member to move relative to the end cover assembly, thereby achieving adaptive movement of the support member with the shape of the tab. For example, when the tab on one side is misaligned with the electrode terminal by welding, the tab on that side or the tab on the other side can push the support member to move in the first concave portion relative to the end cover assembly, and the position of the support member is adjusted, so that the support member will not always act on the tab, and the tab is unlikely to damage due to stress concentration.

As an optional technical solution of the embodiments of the present application, the support member is fully accommodated in the first concave portion.

In the foregoing technical solution, the support member is fully accommodated in the first concave portion, which is beneficial to reducing the occupation of the internal space of the battery cell by the support member and increasing the energy density of the battery cell.

As an optional technical solution of the embodiments of the present application, in the length direction of the end cover assembly, a maximum gap between the portion, accommodated in the first concave portion, of the support member and the side wall surface of the first concave portion is D1, which satisfies: 0.2 mm ≤ D1 ≤ 4 mm.

In the foregoing technical solution, the maximum gap between the portion, accommodated in the first concave portion, of the support member and the side wall surface of the first concave portion in the length direction of the end cover assembly is within a range of 0.2-4 mm, which can ensure a sufficient space for the movement of the support member and a range required for the adaptive movement thereof, and can ensure that the positions of the support member and the end cover assembly are relatively stable and significant shaking is unlikely to occur. If D1 < 0.2 mm, the range of movement of the support member in the length direction of the end cover assembly is small, and its adaptive ability is poor. If D1 > 4 mm, the range of movement of the support member in the length direction of the end cover assembly is large, and when the battery cell is subjected to vibration, the support member is prone to significant shaking to damage the tab.

As an optional technical solution of the embodiments of the present application, in the width direction of the end cover assembly, a maximum gap between the portion, accommodated in the first concave portion, of the support member and the side wall surface of the first concave portion is D2, which satisfies: 0.6 mm ≤ D2 ≤ 4 mm.

In the foregoing technical solution, the maximum gap between the portion, accommodated in the first concave portion, of the support member and the side wall surface of the first concave portion in the width direction of the end cover assembly is within a range of 0.6-4 mm, which can ensure a sufficient space for the movement of the support member and a range required for the adaptive movement thereof, and can ensure that the positions of the support member and the end cover assembly are relatively stable and significant shaking is unlikely to occur. If D2 < 0.6 mm, the range of movement of the support member in the width direction of the end cover assembly is small, and its adaptive ability is poor. If D2 > 4 mm, the range of movement of the support member in the width direction of the end cover assembly is large, and when the battery cell is subjected to vibration, the support member is prone to significant shaking to damage the tab.

As an optional technical solution of the embodiments of the present application, the end cover assembly includes an end cover and an insulating member, the insulating member is located on a side of the end cover facing the main body, and the insulating member is used for insulating the electrode assembly and the end cover; and the buckle portion is in buckle fit with the insulating member.

In the foregoing technical solution, through the buckle fit between the support member and the insulating member, the existing manufacturing method for the end cover does not need to be changed. Compared with the end cover, the insulating member is lower in price and easier to manufacture, which is beneficial to reducing production costs. In addition, the buckle fit between the support member and the insulating member is less likely to cause new problems (such as sealing and insulation problems of the end cover) compared with connection between the support member and the end cover.

As an optional technical solution of the embodiments of the present application, the end cover is provided with a pressure relief mechanism, a first protrusion protruding towards the electrode assembly is formed on the insulating member in the thickness direction of the end cover assembly, a first avoidance space for avoiding the pressure relief mechanism is formed in the first protrusion, a second concave portion is disposed on a side of the support member facing the insulating member, and the first protrusion is at least partially accommodated in the second concave portion.

In the foregoing technical solution, the first protrusion and the second concave portion are configured, the first protrusion is at least partially accommodated in the second concave portion, and the first protrusion cooperates with the second concave portion, which can limit the support member and prevent the support member from moving within the shell.

As an optional technical solution of the embodiments of the present application, there is a gap between the portion, accommodated in the second concave portion, of the first protrusion and a side wall surface of the second concave portion, and the gap is used for movement of the support member relative to the insulating member.

In the foregoing technical solution, there is the gap between the portion, accommodated in the second concave portion, of the first protrusion and the side wall surface of the second concave portion, and the gap enables the support member to move relative to the insulating member, thereby achieving adaptive movement of the support member with the shape of the tab. For example, when the tab on one side is misaligned with the electrode terminal by welding, the tab on that side or the tab on the other side can push the support member to move relative to the insulating member, and the position of the support member is adjusted, so that the support member will not always act on the tab, and the tab is unlikely to damage due to stress concentration.

As an optional technical solution of the embodiment of the present application, a maximum gap between the side wall surface of the second concave portion and a peripheral surface of the first protrusion is D3, which satisfies: 0.4 mm ≤ D3 ≤ 4 mm.

In the foregoing technical solution, the maximum gap between the side wall surface of the second concave portion and the peripheral surface of the first protrusion is within a range of 0.4-4 mm, which can ensure a sufficient space for the movement of the support member and a range required for the adaptive movement thereof, and can ensure that the positions of the support member and the insulating member are relatively stable and significant shaking is unlikely to occur. If D2 < 0.4 mm, the range of movement of the support member is small, and its adaptive ability is poor. If D2 > 4 mm, the range of movement of the support member is large, and when the battery cell is subjected to vibration, the support member is prone to significant shaking to damage the tab.

As an optional technical solution of the embodiments of the present application, in the thickness direction, a second protrusion protruding towards the electrode assembly is formed on the first protrusion, a second avoidance space for avoiding the pressure relief mechanism is formed in the second protrusion, the second avoidance space is in communication with the first avoidance space, and the second protrusion abuts against a bottom wall surface of the second concave portion.

In the foregoing technical solution, the second protrusion protruding towards the electrode assembly is formed on the first protrusion, the second avoidance space is formed in the second protrusion, the second avoidance space is in communication with the first avoidance space, and the insulating member has a relatively large avoidance space for avoiding the pressure relief mechanism to facilitate pressure relief by the pressure relief mechanism, thereby improving the safety of the battery cell. In addition, the second protrusion abuts against the bottom wall surface of the second concave portion, which also limits the movement of the support member from the main body to the end cover assembly, thereby preventing the support body from moving to cause damage to the electrode assembly.

As an optional technical solution of the embodiments of the present application, in the thickness direction of the end cover assembly, the distance between a surface of the end cover assembly facing the main body and the second surface is H, which satisfies: H ≤ 0.5 mm.

In the foregoing technical solution, by limiting the distance between the surface of the end cover assembly facing the main body and the second surface in the thickness direction of the end cover assembly within 0.5 mm, the internal space of the shell can be fully used and the energy density of the battery cell can be increased. If H > 0.5 mm, it indicates that in the direction from the main body to the end cover assembly, the surface of the end cover assembly facing the main body extends beyond the second surface by a relatively long distance, or the second surface extends beyond the surface of the end cover assembly facing the main body by a relatively long distance, so that a lot of space in the shell is wasted, which is not conducive to the increase in the energy density of the battery cell.

As an optional technical solution of the embodiments of the present application, the surface of the end cover assembly facing the main body is flush with the second surface.

In the foregoing technical solution, by aligning the surface of the end cover assembly facing the main body with the second surface, the internal space of the shell can be fully used and the energy density of the battery cell can be increased.

In a second aspect, an embodiment of the present application further provides a battery, which includes a box and the foregoing battery cell, where the battery cell is accommodated in the box.

As an optional technical solution of the embodiments of the present application, the end cover assembly is disposed on a side, close to a bottom wall of the box, of the battery cell.

In the foregoing technical solution, the end cover assembly is disposed on the side, close to the bottom wall of the box, of the battery cell, that is, the battery cell is inverted inside the box.

In a third aspect, an embodiment of the present application further provides an electrical device, which includes the foregoing battery, where the battery is used for providing electrical energy.

### Brief Description of Drawings

In order to explain the technical solutions in the embodiments of the present application more clearly, accompanying drawings required to use in the embodiments will be simply introduced below. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of the battery cell provided by some embodiments of the present application;
FIG. 5 is a schematic top view of the battery cell provided by some embodiments of the present application;
FIG. 6 is a cross-sectional view taken along line A-A in FIG. 5;
FIG. 7 is a cross-sectional view taken along line B-B in FIG. 6;
FIG. 8 is a schematic diagram of a front structure of a support member provided by some embodiments of the present application;
FIG. 9 is a schematic diagram of a back structure of the support member provided by some embodiments of the present application;
FIG. 10 is a schematic front view of the support member provided by some embodiments of the present application;
FIG. 11 is a schematic bottom view of connection of an end cover, an insulating member, and a support member provided by some embodiments of the present application;
FIG. 12 is a schematic top view of a battery cell provided by other embodiments of the present application;
FIG. 13 is a cross-sectional view taken along line D-D in FIG. 12; and
FIG. 14 is an enlarged view of position C in FIG. 6.

Reference numerals: 10 - box; 11 - first portion; 12 - second portion; 20 - battery cell; 21 - end cover assembly; 211 - end cover; 212 - liquid injection hole; 213 - electrode terminal; 214 - pressure relief mechanism; 215 - insulating member; 2151 - first protrusion; 2152 - first concave portion; 2153 - second protrusion; 2154 - first avoidance space; 2155 - second avoidance space; 22 - electrode assembly; 221 - main body; 222 - tab; 23 - shell; 24 - support member; 241 - support body; 2411 - first surface; 2412 - second surface; 2413 - body portion; 24131 - first through hole; 24132 - first groove; 24133 - reinforcing portion; 24134 - second concave portion; 24135 - pressure relief hole; 2414 - protruding portion; 24141 - main convex portion; 24142 - side convex portion; 2415 - accommodating space; 242 - buckle portion; 243 - first blocking member; 244 - abutting portion; 25 - adapter; 100 - battery; 200 - controller; 300 - motor; 1000 - vehicle.

### Detailed Description of Embodiments

To make the objectives, technical solutions and advantages of the embodiments of the present application clearer, the technical solutions in the embodiments of the present application will be described clearly below with reference to the accompanying drawings in the embodiments of the present application. Apparently, the described embodiments are some but not all of the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by technical personnel in the technical field of the present application; the terms used in the specification of the present application are only for the purpose of describing specific embodiments and are not intended to limit the present application; and the terms "include" and "have" in the specification and claims of the present application, the accompanying drawings, and any variations thereof, are intended to cover non-exclusive inclusion. The terms "first", "second", and the like in the specification and claims of the present application or the accompanying drawings are used to distinguish different objects, rather than to describe specific sequences or primary and secondary relationships.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be broadly understood, for example, the "connection" may be a fixed connection, a detachable connection, an integral connection, a direct connection, a connection through a medium, or a communication of interiors of two elements. Those of ordinary skill in the art may understand the specific meanings of the above terms in the present application according to specific circumstances.

The term "and/or" in the present application is merely an association relationship for describing associated objects, and represents that three relationships may exist. For example, A and/or B may represent the following three cases: A exists alone, both A and B exist, and B exists alone. In addition, the character "/" in the present application generally indicates an "or" relationship between the associated objects.

In the embodiments of the present application, the same reference numerals represent the same components, and for simplicity, detailed descriptions of the same components are omitted in different embodiments. It should be understood that, in the embodiments of the present application shown in the accompanying drawings, dimensions of various components and integrated apparatuses, such as thickness, length, and width, are only illustrative and should not constitute any limitations on the present application.

In the present application, "a plurality of" means two (inclusive) or more.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cells.

The battery cell includes an electrode assembly and an electrolytic solution, and the electrode assembly is composed of a positive electrode sheet, a negative electrode sheet, and a separator. The battery cell mainly relies on migration of metal ions between the positive electrode sheet and the negative electrode sheet to work. The positive electrode sheet includes a positive electrode current collector and a positive electrode active material layer, a surface of the positive electrode current collector is coated with the positive electrode active material layer, and the positive electrode current collector not coated with the positive electrode active material layer protrudes from the positive electrode current collector coated with the positive electrode active material layer and is used as a positive sub-tab. In an example of a lithium-ion battery, a material of the positive electrode current collector may be aluminum, and a positive electrode active material may be lithium cobaltate, lithium iron phosphate, ternary lithium, lithium manganate, or the like. The negative electrode sheet includes a negative electrode current collector and a negative electrode active material layer, a surface of the negative electrode current collector is coated with the negative electrode active material layer, and the negative electrode current collector not coated with the negative electrode active material layer protrudes from the negative electrode current collector coated with the negative electrode active material layer and is used as a negative sub-tab. A material of the negative electrode current collector may be copper, and a negative electrode active material may be carbon, silicon, or the like. In order to ensure that no fusing occurs when high current passes through, there is a plurality of positive sub-tabs laminated together, and there is a plurality of negative sub-tabs laminated together. A material of the separator may be polypropylene (PP), polyethylene (PE), or the like. Moreover, the electrode assembly may be of a wound structure or a laminated structure, and the embodiments of the present application are not limited thereto.

At present, in view of the development of the market situation, use of batteries is increasingly widespread. Batteries are not only used in energy storage power systems such as hydropower, firepower, wind power, and solar power plants, but also widely used in electric vehicles such as electric bicycles, electric motorcycles, and electric cars, as well as in various fields such as military equipment and aerospace. With the continuous expansion of the application fields of batteries, their market demand is also increasing.

The development of battery technology needs to consider various design factors simultaneously, such as energy density, cycle life, discharge capacity, charge and discharge rate, and other performance parameters. In addition, safety of batteries should also be considered. However, in scenarios where battery cells are inverted, the safety of the battery cells is poor.

The inventor further studied and found that the battery cell includes an electrode assembly, which is a component in the battery cell that undergoes electrochemical reactions. The electrode assembly is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute a main body of the electrode assembly, while portions of the positive electrode sheet and the negative electrode sheet that do not contain active materials constitute respective sub-tabs. In order to ensure that no fusing occurs when high current passes through, there is a plurality of sub-tabs laminated together to form a tab. In a scenario where a battery cell is inverted, the tab located below the main body will be subjected to the gravity of the main body. Because the tab is formed by laminating a plurality of sub-tabs together, the tab is prone to bifurcation under the action of the gravity. The bifurcated portions are easily inserted into the main body and come into contact the positive or negative electrode sheet in the main body to cause short circuits, fires in severe cases, and even explosions, leading to poor safety of the battery cell.

In view of this, an embodiment of the present application provides a battery cell, where a support member is disposed between an end cover assembly and a main body of the battery cell. In a scenario where the battery cell is inverted, the support member can support an electrode assembly, so that the gravity of the main body of the electrode assembly is less prone to transmission to a tab to cause bifurcation and insertion of the tab, thereby improving the safety of the battery cell.

A support body is connected to the end cover assembly through a buckle portion, so that the support member will not move up and down inside a shell and will not hit the electrode assembly to damage the electrode assembly.

The buckle portion is disposed between a first surface and a second surface to reduce volume occupation in a thickness direction of the end cover assembly, which is beneficial to increasing an energy density of the battery cell.

Further, the buckle portion does not extend beyond the first surface or the second surface, so that the buckle portion is less susceptible to external force and fracture in a production process. When materials are piled, a plurality of support members are laminated, and the buckle portion does not exceed beyond the first surface or the second surface, so that the first surface of one support member can fit onto the second surface of the other support member. In this case, the contact area of two support members is larger, which is conducive to stably piling the materials.

In addition, as the buckle portion is disposed between the first surface and the second surface, compared with a situation that the buckle portion extends beyond the first surface or the second surface, the two adjacent support members are unlikely to hook each other during piling, and the other support member will not be pulled when one support member is fetched, thereby improving production safety and efficiency.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, or the like. The spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not limit the foregoing electrical devices.

For convenient description, the following embodiments are described by an example of a vehicle 1000 as an electrical device.

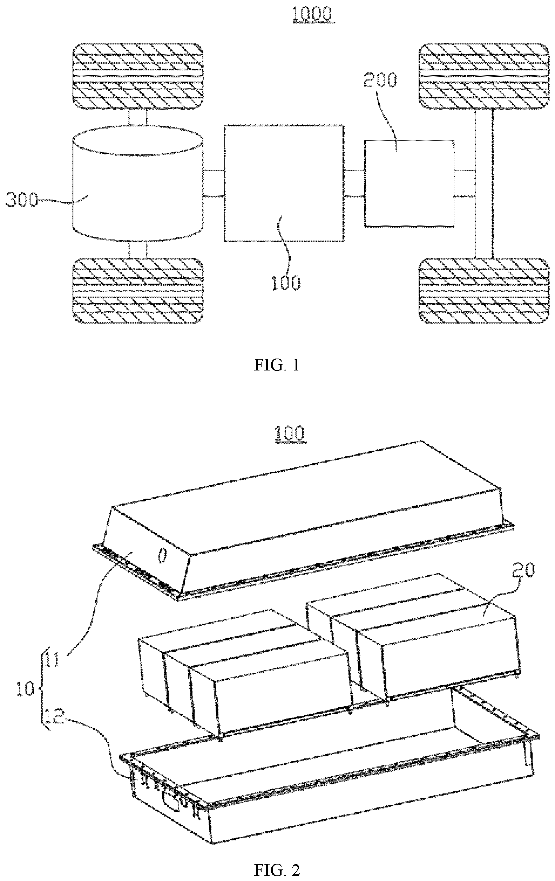

Refer to FIG. 1. FIG. 1 is a schematic structural diagram of a vehicle 1000 provided by some embodiments of the present application. The vehicle 1000 may be a fuel-powered vehicle, a gas-powered vehicle, or a new energy vehicle, and the new energy vehicle may be a battery electric vehicle, a hybrid vehicle, an extended-range vehicle, or the like. A battery 100 is disposed inside the vehicle 1000, and the battery 100 may be disposed at a bottom, head or tail of the vehicle 1000. The battery 100 may be used to supply power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 provided by some embodiments of the present application. The battery 100 includes a box 10 and battery cells 20, where the battery cells 20 are accommodated in the box 10. The box 10 is used for providing an accommodating space for the battery cells 20, and the box 10 may have many structures. In some embodiments, the box 10 may include a first portion 11 and a second portion 12, the first portion 11 and the second portion 12 cover each other, and the first portion 11 and the second portion 12 jointly confine the accommodating space for accommodating the battery cells 20. The second portion 12 may be of a hollow structure with an opening at one end, the first portion 11 may be of a plate-like structure, and the first portion 11 covers an open side of the second portion 12, so that the first portion 11 and the second portion 12 jointly confine the accommodating space; or each of the first portion 11 and the second portion 12 may be of a hollow structure with an open side, and the open side of the first portion 11 covers the open side of the second portion 12. Of course, the box 10 formed by the first portion 11 and the second portion 12 may be in various shapes, such as cylindrical or cuboid.

There may be a plurality of battery cells 20 in the battery 100, and the plurality of battery cells 20 may be in series connection, parallel connection, or series-parallel connection. The series-parallel connection refers to a combination of series connection and parallel connection in the plurality of battery cells 20. The plurality of battery cells 20 may be directly connected in series, in parallel, or in series and parallel together, and then the whole formed by the plurality of battery cells 20 is accommodated in the box 10. Of course, the battery 100 may alternatively be in a form of a battery module formed by first connecting the plurality of battery cells 20 in series, in parallel, or in series and parallel, and a plurality of battery modules are then connected in series, in parallel, or in series and parallel to form a whole accommodated in the box 10. The battery 100 may further include other structures, for example, the battery 100 may further include a current collecting component for achieving electrical connection between the plurality of battery cells 20.

Each battery cell 20 may be a secondary battery cell or a primary battery cell, or may be a lithium-sulfur battery cell, a sodium-ion battery cell, or a magnesium-ion battery cell, but is not limited to this. The battery cell 20 may be cylindrical, flat, cuboid, or in other shapes.

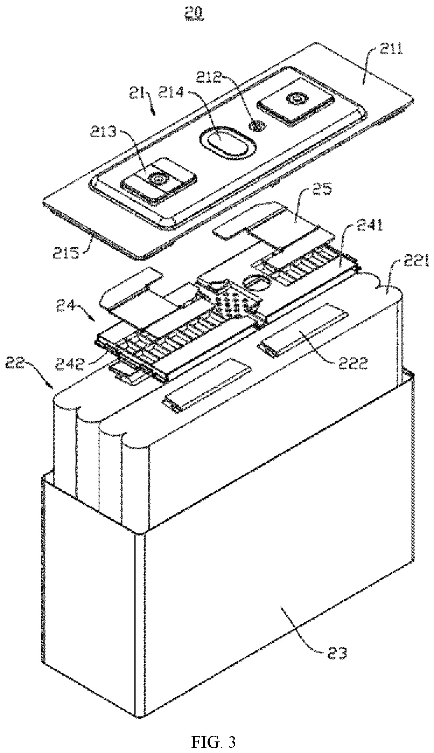

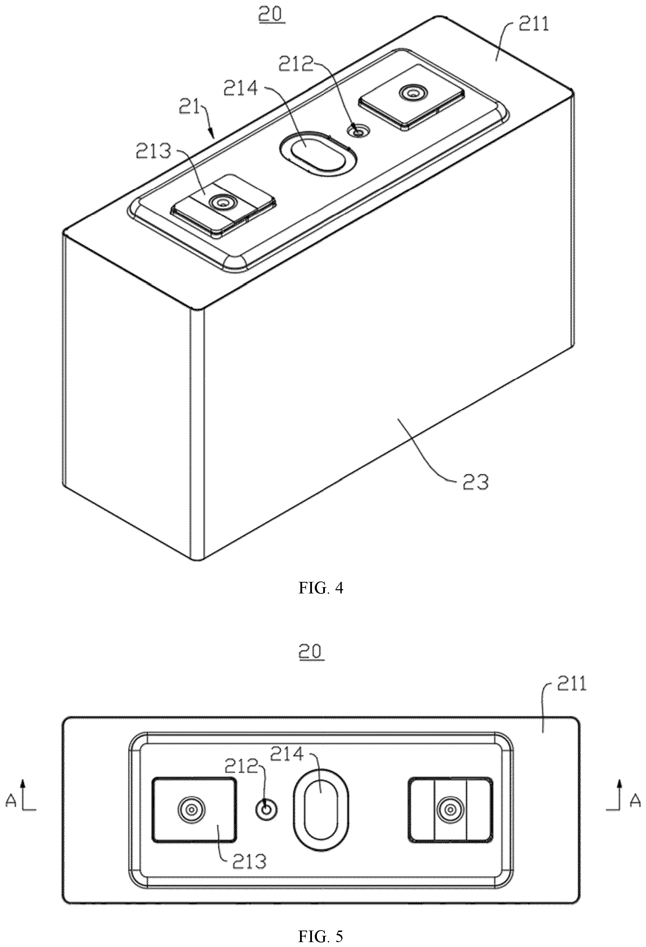

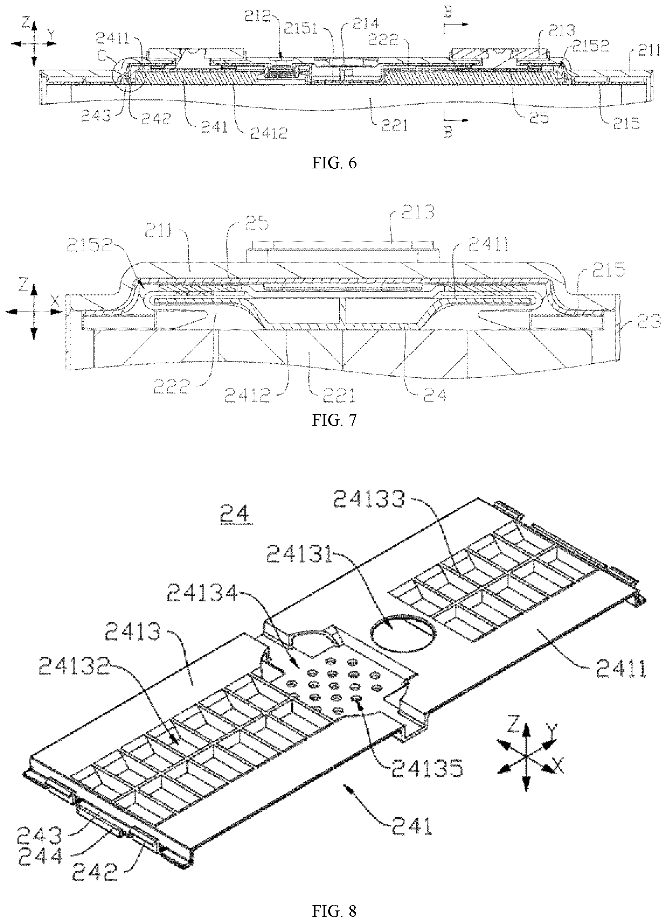

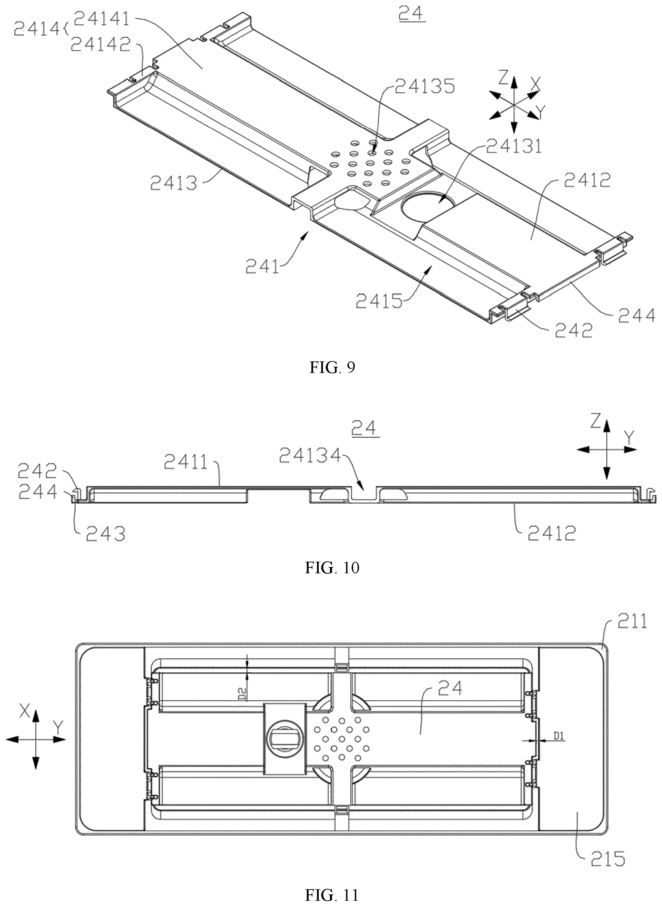

Refer to FIGs. 3, 4, 5, 6, 7, 8, and 9. FIG. 3 is an exploded view of the battery cell 20 provided by some embodiments of the present application. FIG. 4 is a schematic structural diagram of the battery cell 20 provided by some embodiments of the present application. FIG. 5 is a schematic top view of the battery cell 20 provided by some embodiments of the present application. FIG. 6 is a cross-sectional view taken along line A-A in FIG. 5. FIG. 7 is a cross-sectional view taken along line B-B in FIG. 6. FIG. 8 is a schematic diagram of a front structure of a support member 24 provided by some embodiments of the present application. FIG. 9 is a schematic diagram of a back structure of the support member 24 provided by some embodiments of the present application. An embodiment of the present application provides a battery cell 20. The battery cell 20 includes a shell 23, an electrode assembly 22, an end cover assembly 21, and a support member 24. The shell 23 has an opening. The electrode assembly 22 has a main body 221 and a tab 222 protruding from the main body 221, and the electrode assembly 22 is accommodated in the shell 23. The end cover assembly 21 seals the opening. The support member 24 is located between the end cover assembly 21 and the main body 221. The support member 24 includes a support body 241 and a buckle portion 242, and in a thickness direction of the end cover assembly 21, the support body 241 has a first surface 2411 facing the end cover assembly 21 and a second surface 2412 away from the end cover assembly 21. The buckle portion 242 is disposed on the support body 241, and the buckle portion 242 is in buckle fit with the end cover assembly 21. The buckle portion 242 is located between the first surface 2411 and the second surface 2412.

The end cover assembly 21 includes an end cover 211. The end cover 211 refers to a component that is closed to the opening of the shell 23 to isolate an internal environment of the battery cell 20 from an external environment. Unlimitedly, a shape of the end cover 211 may adapt to that of the shell 23 to fit the shell 23. Optionally, the end cover 211 may be made of a material with certain hardness and strength (such as aluminum alloy). In this case, the end cover 211 is less prone to deformation during extrusion and deformation, so that the battery cell 20 can have higher structural strength and its safety can be improved. A material of the end cover 211 may be various, such as copper, iron, aluminum, stainless steel, aluminum alloy, or plastic, and is not specially limited in the embodiments of the present application. Optionally, the end cover assembly 21 further includes an electrode terminal 213, and the electrode terminal 213 is disposed on the end cover 211. The electrode terminal 213 may be used for electrical connection with the electrode assembly 22 to output or input electrical energy of the battery cell 20. Optionally, the end cover assembly 21 further includes a pressure relief mechanism 214, the pressure relief mechanism 214 is disposed on the end cover 211, and the pressure relief mechanism 214 is opened when internal pressure or temperature of the battery cell 20 reaches a detonation pressure to release the internal pressure of the battery cell 20. In some embodiments, the end cover assembly 21 further includes an insulating member 215, the insulating member 215 is disposed on an inner side of the end cover 211, and the insulating member 215 may be used for isolating electrical connection components inside the shell 23 from the end cover 211 to reduce a risk of short-circuiting. For example, the insulating member 215 may be made of plastic, rubber, or the like.

The shell 23 is a component fitting the end cover 211 to form an internal environment of the battery cell 20, where the formed internal environment may be used for accommodating the electrode assembly 22, an electrolytic solution, and other components. The shell 23 and the end cover 211 may be independent components, the shell 23 may be provided with an opening, and the cover body 211 is closed to the opening to form the internal environment of the battery cell 20. Unlimitedly, the end cover 211 and the shell 23 may be integrated. Specifically, the end cover 211 and the shell 23 may form a common joint surface before other components are put into the shell. When the interior of the shell 23 is to be encapsulated, the end cover 211 is closed to the shell 23. The shell body 23 may be in various shapes and sizes, such as cuboid, cylinder, or hexagonal prism. Specifically, the shape of the shell body 23 may be determined according to a specific shape and size of the electrode assembly 22. A material of the shell body 23 may be various, such as copper, iron, aluminum, stainless steel, aluminum alloy, or plastic, and is not specially limited in the embodiments of the present application.

The electrode assembly 22 is a component that undergoes electrochemical reactions in the battery cell 20. The shell 23 may contain one or more electrode assemblies 22. The electrode assembly 22 is mainly formed by winding or laminating a positive electrode sheet and a negative electrode sheet, and a separator is usually disposed between the positive electrode sheet and the negative electrode sheet. Portions of the positive electrode sheet and the negative electrode sheet that contain active materials constitute the main body 221 of the electrode assembly 22, while portions of the positive electrode sheet and the negative electrode sheet that do not contain active materials constitute respective sub-tabs. In order to ensure that no fusing occurs when high current passes through, there is a plurality of sub-tabs laminated together to form the tab 222. The positive tab and the negative tab may be jointly located at one end of the main body 221 or separately located at two ends of the main body 221. In charging and discharging processes of the battery 100, positive and negative electrode active materials react with an electrolytic solution, and the tab 222 is connected to the electrode terminal 213 to form a current circuit. The tab 222 protrudes from the main body 221 to facilitate connection with the electrode terminal 213, so as to output electrical energy of the battery cell 20 or input electrical energy to the battery cell 20.

The support member 24 is located inside the shell 23 and between the end cover assembly 21 and the main body 221. It should be noted that a concave portion may be formed on a side of the end cover assembly 21 facing the main body 221, and the support member 24 may be partially or fully accommodated in the concave portion, that is, the support member 24 is located between the end cover assembly 21 and the main body 221. In a scenario where the battery cell is inverted, the support member 24 can support the main body 221, so that the gravity of the main body 221 is less prone to transmission to the tab 222.

The support body 241 is a portion of the support member 24 that mainly supports the main body 221 in the scenario where the battery cell is inverted, and is a main portion of the support member 24. In the thickness direction of the end cover assembly 21, the support body 241 has a first surface 2411 and a second surface 2412 that are opposite, where the first surface 2411 faces the end cover assembly 21, and the second surface 2412 is away from the end cover assembly 21.

In this embodiment, the thickness direction of the end cover assembly 21 is the same as that of the support member 24. As shown in FIGs. 6, 7, 8 and 9, the thickness direction of the end cover assembly 21 may be a Z direction in the figures.

The buckle portion 242 is a portion of the support member 24 that is in buckle fit with the end cover assembly 21. The buckle portion 242 is connected to the support body 241. The buckle portion 242 may be formed with a hooked structure. In this case, the buckle portion 242 may hook the end cover assembly 21 together to achieve the buckle fit between the buckle portion 242 and the end cover assembly 21. In the thickness direction, the buckle portion 242 does not exceed beyond the first surface 2411 in a direction where the main body 221 points to the end cover assembly 21, and the buckle portion 242 does not exceed beyond the second surface 2412 in a direction where the end cover assembly 21 points to the main body 221.

The support member 24 is disposed between the end cover assembly 21 and the main body 221 of the battery cell 20, and in the scenario where the battery cell is inverted, the support member 241 can support the electrode assembly 22, so that the gravity of the main body 221 of the electrode assembly 22 is less prone to transmission to the tab 222 to cause bifurcation and insertion of the tab 222, thereby improving the safety of the battery cell 20. The support body 241 is connected to the end cover assembly 21 through the buckle portion 242, so that the support member 24 will not move up and down inside the shell 23 and will not hit the electrode assembly 22 to damage the electrode assembly 22. The buckle portion 242 is disposed between the first surface 2411 and the second surface 2412 to reduce volume occupation in the thickness direction of the end cover assembly 21, which is beneficial to increasing an energy density of the battery cell 20. Further, the buckle portion 242 does not extend beyond the first surface 2411 or the second surface 2412, so that the buckle portion 242 is less susceptible to external force and fracture in a production process. When materials are piled, a plurality of support members 24 are laminated, and the buckle portion 242 does not exceed beyond the first surface 2411 or the second surface 2412, so that the first surface 2411 of one support member 24 can fit onto the second surface 2412 of the other support member 24. In this case, the contact area of two support members 24 is larger, which is conducive to stably piling the materials. In addition, as the buckle portion 242 is disposed between the first surface 2411 and the second surface 2412, compared with a situation that the buckle portion 242 extends beyond the first surface 2411 or the second surface 2412, the two adjacent support members 24 are unlikely to hook each other during piling, and the other support member 24 will not be pulled when one support member 24 is fetched, thereby improving production safety and efficiency.

With reference to FIG. 6 and FIG. 7, in some embodiments, the second surface 2412 abuts against the main body 221.

The expression "the second surface 2412 abuts against the main body 221" indicates that the second surface 2412 is close to a surface of the main body 221 facing the support body 241. The second surface 2412 may only be in contact with the surface of the main body 221 facing the support body 241, or may be in contact with the surface of the main body 221 facing the support body 241 and has a force effect.

The second surface 2412 abuts against the main body 221, so that relative positions of the support body 241 and the main body 221 will not change in a process of switching the battery cell from upright to inverted, the main body 221 will not collide with the support body 241, the electrode assembly 22 is less likely to damage, and the service life of the battery cell 20 can be prolonged accordingly.

With reference to FIG. 6 and FIG. 7, in some embodiments, the tab 222 is bent around the support body 241.

The expression "the tab 222 is bent around the support body 241" indicates that the tab 222 forms a bend at an edge of the support body 241 from the side of the support body 241 facing the main body 221, and extends to the side of the support body 241 away from the main body 221. With reference to FIG. 6 and FIG. 7, in some embodiments, the battery cell 20 includes an adapter 25, and the adapter 25 connects a portion of the tab 222 on the side of the support body 241 away from the main body 221 and the electrode terminal 213 to electrically connect the tab 222 with the electrode terminal 213.

It should be noted that, in this embodiment of the present application, the tab 222 is bent around the support body 241, that is, the positive tab is bent around the support body 241, the negative tab is bent around the support body 241, or both the positive tab and the negative tab are bent around the support body 241. The tab 222 is bent around the support body 241, and the tab 222 may be or may not be in contact with an end of the support body 241.

By bending the tab 222 of the electrode assembly 22 around the support body 241, the gravity of the main body 221 of the electrode assembly 22 is less prone to transmission to the tab 222 in the scenario where the battery cell is inverted, and bifurcation and insertion of the tab 222 are not easily caused, thereby improving the safety of the battery cell 20.

With reference to FIGs. 3, 4, 5, 6, 7, 8 and 9, the support body 241 includes a body portion 2413 and a protruding portion 2414, and the tab 222 is bent around the body portion 2413. In the thickness direction, the protruding portion 2414 protrudes from a side of the body portion 2413 away from the end cover assembly 21. A surface of the protruding portion 2414 away from the end cover assembly 21 is the second surface 2412, and a surface of the body portion 2413 facing the end cover assembly 21 is the first surface 2411.

The body portion 2413 may be of a plate-like structure to facilitate the bending of the tab 222 around the body portion 2413. The protruding portion 2414 is of a raised structure protruding from the side of the body portion 2413 away from the end cover assembly 21, and the protruding portion 2414 may be in any shape, such as a strip, ring, or wave shape. The present application does not limit the shape.

The first surface 2411 is the surface of the body portion 2413 facing the end cover assembly 21, and is also the surface of the body portion 2413 away from the main body 221. The second surface 2412 is the surface of the protruding portion 2414 away from the end cover assembly 21, and is also the surface of the protruding portion 2414 facing the main body 221.

The protruding portion 2414 protruding towards the main body 221 is formed on the body portion 2413, so that the protruding portion 2414 abuts against the main body 221, and the protruding portion 2414 can increase the strength of the support body 241 to improve the support ability of the support body 241. Meanwhile, the body portion 2413 is relatively thin, which facilitates the bending of the tab 222 around the body portion 2413.

In some embodiments, the protruding portion 2414 includes a main convex portion 24141 and side convex portions 24142, and a plurality of side convex portions 24142 are disposed on at least one side of the main convex portion 24141 in the width direction of the end cover assembly 21. In a length direction of the end cover assembly 21, the plurality of side convex portions 24142 are arranged at intervals. An accommodating space 2415 for accommodating the tab 222 is formed between the two adjacent side convex portions 24142.

Generally, the width direction of the end cover assembly 21 is the same as that of the support member 24. As shown in FIGs. 6, 7, 8 and 9, the width direction of the end cover assembly 21 may be an X direction in the figures. The length direction of the end cover assembly 21 is the same as that of support member 24. As shown in FIGs. 6, 7, 8 and 9, the length direction of the end cover assembly 21 may be a Y direction in the figures.

The main convex portion 24141 is a portion of the protruding portion 2414 that extends in the length direction of the end cover assembly 21. The side convex portions 24142 are disposed on at least one side of the main convex portion 24141 in the width direction of the end cover assembly 21. The protruding portion 2414 includes a plurality of side convex portions 24142, and the side convex portions 24142 are arranged at intervals in the length direction of the end cover assembly 21.

An accommodating space 2415 is formed between the two adjacent side convex portions 24142, and the accommodating space 2415 is used for accommodating the tab 222. As shown in FIG. 8 and FIG. 9, the main convex portion 24141 and the two side convex portions 24142 jointly enclose the foregoing accommodating space 2415.

The accommodating space 2415 for accommodating the tab 222 is formed between the two adjacent side convex portions 24142, so that the tab 222 is unlikely to interfere with the support member 24 and can be smoothly bent around the body portion 2413, and the tab 222 is unlikely to damage. Meanwhile, the main convex portion 24141 and the side convex portions 24142 can protect the tab 222 and reduce the possibility of damage of the tab 222 in contact with other components, thereby improving the safety and service life of the battery cell 20.

In some embodiments, a first groove 24132 is disposed on the side of the body portion 2413 facing the end cover assembly 21, and the first groove 24132 corresponds to the main convex portion 24141. The first groove 24132 can reduce the weight of the support member 24, reduce material consumption, and save production costs.

In some embodiments, a reinforcing portion 24133 is disposed inside the first groove 24132, and the reinforcing portion 24133 is connected to a bottom wall surface and side wall surfaces of the first groove 24132 to increase structural strength of the support member 24 and ensure supporting capacity of the support member 24.

In some embodiments, the end cover assembly 21 is provided with a liquid injection hole 212, the support body 241 is provided with a first through hole 24131, and the first through hole 24131 corresponds to the liquid injection hole 212.

The liquid injection hole 212 is a through hole disposed on the end cover assembly 21 for liquid injection, for example, the liquid injection hole 212 may be disposed on the end cover 211. The first through hole 24131 is a through hole disposed on the support body 241 for liquid injection. Optionally, the liquid injection hole 212 is coaxial with the first through hole 24131.

The liquid injection hole 212 and the first through hole 24131 facilitate liquid injection.

In some embodiments, the first through hole 24131 deviates from a central position of the support body 241.

The expression "the first through hole 24131 deviates from a central position of the support body 241" indicates that the first through hole 24131 is not in the central position of the support body 241.

The first through hole 24131 deviates from the central position of the support body 241, and when the support member 24 is mounted on the end cover assembly 21, the first through hole 24131 can play a foolproof role and reduce a risk of incorrect mounting to some extent.

In some embodiments, at least one side convex portion 24142 is provided with the buckle portion 242.

The expression "at least one side convex portion 24142 is provided with the buckle portion 242" includes that one protruding portion 24142 is provided with the buckle portion 242, two protruding portions 24142 are provided with the buckle portions 242, and more than two protruding portions 24142 are provided with the buckle portions 242.

The buckle portion 242 is disposed on the side convex portion 24142, which skillfully uses the height of the side convex portion 24142 protruding from the body portion 2413, so that the buckle portion 242 can be hidden between the first surface 2411 and the second surface 2412 to reduce the space occupation of the support member 24 in the thickness direction of the end cover 211 and increase the energy density.

With reference to FIG. 8 and FIG. 9, in some embodiments, the main convex portion 24141 has a first end and a second end that are opposite in the length direction, and the side convex portion 24142 is disposed at the first end and/or the second end. The side convex portion 24142 located at the first end and/or the second end is provided with the buckle portion 242.

The first end and the second end are two ends of the main convex portion 24141 in the length direction of the end cover assembly 21. The expression "the side convex portion 24142 is disposed at the first end and/or the second end" includes three schemes: the side convex portion 24142 is disposed at the first end, the side convex portion 24142 is disposed at the second end, and the side convex portion 24142 is disposed at both the first end and the second end.

The buckle portion 242 may be disposed on the side convex portion 24142 at the first end, or on the side convex portion 24142 at the second end, or on the side convex portions 24142 at the first end and the second end.

The buckle portion 242 is disposed on the side convex portion 24142 at the first end and/or the second end to facilitate the buckle fit between the buckle portion 242 and the end cover assembly 21 during assembly.

Refer to FIGs. 6, 7, 8, 9 and 10. FIG. 10 is a schematic front view of the support member 24 provided by some embodiments of the present application. In some embodiments, the side convex portion 24142 at the first end is a first convex portion, and the side convex portion 24142 at the second end is a second convex portion. A first blocking member 243 is further disposed at the first end, and the first blocking member 243 extends beyond the buckle portion 242 disposed on the first convex portion in a direction from the second end to the first end. And/or a second blocking member is further disposed at the second end, and the second blocking member extends beyond the buckle portion 242 disposed on the second convex portion in a direction from the first end to the second end.

The first convex portion specifically refers to the side convex portion 24142 disposed at the first end. The second convex portion specifically refers to the side convex portion 24142 disposed at the second end.

The first blocking member 243 is of a protruding structure disposed at the first end. In the direction from the second end to the first end, the first blocking member 243 extends beyond the buckle portion 242 disposed on the first convex portion. The first blocking member 243 may be of a plate-like structure. The first blocking member 243 extends from the first end in the direction from the second end to the first end and extends beyond the buckle portion 242 disposed on the first convex portion.

The second blocking member is of a protruding structure disposed at the second end. In the direction from the first end to the second end, the second blocking member extends beyond the buckle portion 242 disposed on the second convex portion. The second blocking member may be of a plate-like structure. The second blocking member extends from the second end in the direction from the first end to the second end and extends beyond the buckle portion 242 disposed on the second convex portion.

The first blocking member 243 is disposed at the first end, and the first blocking member 243 extends beyond the buckle portion 242 disposed at the first convex portion in the direction from the second end to the first end, so that when the support member 24 collides with other components in the direction from the second end to the first end, the first blocking member 243 is prone to collision with other components first, which can reduce the possibility of collision with the buckle portion 242 to some extent and reduce the possibility of damage to the buckle portion 242. Similarly, the second blocking member is disposed at the second end, and the second blocking member extends beyond the buckle portion 242 disposed on the second convex portion in the direction from the first end to the second end, so that when the support member 24 collides with other components in the direction from the first end to the second end, the second blocking member is prone to collision with other components first, which can reduce the possibility of collision with the buckle portion 242 to some extent and reduce the possibility of damage to the buckle portion 242.

In some embodiments, an abutting portion 244 is disposed on the first blocking member 243 and/or the second blocking member. In the thickness direction, the abutting portion 244 abuts against the end cover assembly 21.

The abutting portion 244 may be of a raised structure protruding from the first blocking member 243 or the second blocking member in the thickness direction. The abutting portion 244 may be disposed only on the first blocking member 243, or only on the second blocking member, or on both the first blocking member 243 and the second blocking member. In the thickness direction, a side of the abutting portion 244 away from the first blocking member 243 or the second blocking member is in contact with the side of the end cover assembly 21 facing the main body 221.

The abutting portion 244 abuts against the end cover assembly 21, so that the support body 241 cannot move from the main body 221 to the end cover assembly 21 in the thickness direction, the support body 241 is better limited, and the support body 241 is prevented from moving to damage the electrode assembly 22.

With reference to FIG. 7 and FIG. 8, in some embodiments, a plurality of side convex portions 24142 are disposed on two sides of the main convex portion 24141 in the width direction.

Among the plurality of side convex portions 24142, some side convex portions 24142 are located on one side of the main body 221 in the width direction, and the other side convex portions 24142 are located on the other side of the main body 221 in the width direction, so that the plurality of side convex portions 24142 are disposed on two sides of the main body 221 in the width direction.

The plurality of side convex portions 24142 are disposed on the two sides of the main convex portion 24141 in the width direction to form a plurality of accommodating spaces 2415 for accommodating the tabs 222, which facilitates the bending of the tabs 222 around the body portion 2413 from the two sides of the main convex portion 24141 in the width direction.

In some embodiments, the buckle portion 242 is disposed on at least one end of the support body 241 in the length direction of the end cover assembly 21.

In the length direction of the end cover assembly 21, the support body 241 has a first end and a second end that are opposite, and the buckle portion 242 is disposed on at least one of the first end and the second end.

The buckle portion 242 is disposed on at least one end of the support body 241 in the length direction of the end cover assembly 21, which facilitates the buckle fit between the buckle portion 242 and the end cover assembly 21 during assembly.

In some embodiments, the support body 241 has a first end and a second end that are opposite in the length direction, and the buckle portions 242 are disposed at the first end and the second end. A first blocking member 243 is further disposed at the first end, and the first blocking member 243 extends beyond the buckle portion 242 disposed at the first end in a direction from the second end to the first end. And/or a second blocking member is further disposed at the second end, and the second blocking member extends beyond the buckle portion 242 disposed at the second end in a direction from the first end to the second end.

The first blocking member 243 is disposed at the first end, and the first blocking member 243 extends beyond the buckle portion 242 disposed at the first convex portion in the direction from the second end to the first end, so that when the support member 24 collides with other components in the direction from the second end to the first end, the first blocking member 243 is prone to collision with other components first, which can reduce the possibility of collision with the buckle portion 242 to some extent and reduce the possibility of damage to the buckle portion 242. Similarly, the second blocking member is disposed at the second end, and the second blocking member extends beyond the buckle portion 242 disposed on the second convex portion in the direction from the first end to the second end, so that when the support member 24 collides with other components in the direction from the first end to the second end, the second blocking member is prone to collision with other components first, which can reduce the possibility of collision with the buckle portion 242 to some extent and reduce the possibility of damage to the buckle portion 242.

In some embodiments, a first concave portion 2152 is disposed on a side of the end cover assembly 21 facing the electrode assembly 22, and the support member 24 is at least partially accommodated in the first concave portion 2152.

The end cover assembly 21 includes an end cover 211 and an insulating member 215, the end cover 211 is used for closing the opening of the shell 23, and the insulating member 215 is used for insulating the end cover 211 and the electrode assembly 22. A second groove is formed on a side of the end cover 211 facing the electrode assembly 22, and the insulating member 215 is at least partially accommodated in the second groove. The first concave portion 2152 is formed on a side of the insulating member 215 facing the electrode assembly 22, and the support member 24 is at least partially accommodated in the first concave portion 2152. A convex portion is formed on a side of the end cover 211 away from the electrode assembly 22, and the convex portion corresponds to the groove. Optionally, a protrusion is formed on a side of the insulating member 215 away from the electrode assembly 22 and at a position corresponding to the groove, the protrusion is partially accommodated in the second groove, and the first concave portion 2152 is formed inside the protrusion.

The first concave portion 2152 is formed on the side of the end cover assembly 21 facing the electrode assembly 22, and the support member 24 is at least partially accommodated in the first concave portion 2152, which are beneficial to increasing the energy density.

Refer to FIGs. 6, 7, 8, 9, 10 and 11. FIG. 11 is a schematic bottom view of connection of the end cover 211, the insulating member 215, and the support member 24 provided by some embodiments of the present application. In some embodiments, there is a gap between the portion, accommodated in the first concave portion 2152, of the support member 24 and a side wall surface of the first concave portion 2152, and the gap is used for movement of the support member 24 relative to the end cover assembly 21.

The expression "there is a gap between the portion, accommodated in the first concave portion 2152, of the support member 24 and a side wall surface of the first concave portion 2152" may be that there is a gap between the portion, accommodated in the first groove 24132, of the support member 24 and the side wall surface of the first concave portion 2152 in the length direction to allow the support member 24 to move relative to the end cover assembly 21 in the length direction.

The expression "there is a gap between the portion, accommodated in the first concave portion 2152, of the support member 24 and a side wall surface of the first concave portion 2152" may alternatively be that there is a gap between the portion, accommodated in the first groove 24132, of the support member 24 and the side wall surface of the first concave portion 2152 in the width direction to allow the support member 24 to move relative to the end cover assembly 21 in the width direction.

There is the gap between the portion, accommodated in the first concave portion 2152, of the support member 24 and the side wall surface of the first concave portion 2152, and the gap enables the support member 24 to move relative to the end cover assembly 21, thereby achieving adaptive movement of the support member 24 with the shape of the tab 222. For example, when the tab 222 on one side is misaligned with the electrode terminal 213 by welding, the tab 222 on that side or the tab 222 on the other side can push the support member 24 to move in the first concave portion 2152 relative to the end cover assembly 21, and the position of the support member 24 is adjusted, so that the support member 24 will not always act on the tab 222, and the tab 222 is unlikely to damage due to stress concentration.

In some embodiments, the support member 24 is fully accommodated in the first concave portion 2152.

The support member 24 is fully accommodated in the first concave portion 2152, which is beneficial to reducing the occupation of the internal space of the battery cell 20 by the support member 24 and increasing the energy density of the battery cell 20.

With reference to FIGs. 6, 7, 8, 9, 10 and 11, in some embodiments, in the length direction of the end cover assembly 21, a maximum gap between the portion, accommodated in the first concave portion 2152, of the support member 24 and the side wall surface of the first concave portion 2152 is D1, which satisfies: 0.2 mm ≤ D1 ≤ 4 mm.

D1 represents the maximum gap between the portion, accommodated in the first concave portion 2152, of the support member 24 and the side wall surface of the first concave portion 2152 in the length direction. Because the support member 24 can adaptively move relative to the electrode assembly 22, distances between the two ends of the support member 24 and the corresponding side wall surfaces may be different in the length direction. An example is shown in FIG. 11. The gap between the left side of the support member 24 and the left side wall surface of the first concave portion 2152 may be N1, the distance between the right side of the support member 24 and the right side wall surface of the first concave portion 2152 may be N2, and N1 may be greater than N2, equal to N2, or less than N2. Here, the expression "in the length direction of the end cover assembly 21, a maximum gap between the portion, accommodated in the first concave portion 2152, of the support member 24 and the side wall surface of the first concave portion 2152" refers to a larger one of N1 and N2.

In the length direction of the end cover assembly 21, a value of the maximum gap between the portion, accommodated in the first concave portion 2152, of the support member 24 and the side wall surface of the first concave portion 2152 may be: D1 = 0.2 mm, 0.4 mm, 0.8 mm, 1 mm, 1.5 mm, 2 mm, 2.5 mm, 3 mm, 3.5 mm, 4 mm, or the like.

The maximum gap between the portion, accommodated in the first concave portion 2152, of the support member 24 and the side wall surface of the first concave portion 2152 in the length direction of the end cover assembly 21 is within a range of 0.2-4 mm, which can ensure a sufficient space for the movement of the support member 24 and a range required for the adaptive movement thereof, and can ensure that the positions of the support member 24 and the end cover assembly 21 are relatively stable and significant shaking is unlikely to occur. If D1 < 0.2 mm, the range of movement of the support member 24 in the length direction of the end cover assembly 21 is small, and its adaptive ability is poor. If D1 > 4 mm, the range of movement of the support member 24 in the length direction of the end cover assembly 21 is large, and when the battery cell 20 is subjected to vibration, the support member 24 is prone to significant shaking to damage the tab 222.

With reference to FIGs. 6, 7, 8, 9, 10 and 11, in some embodiments, in the width direction of the end cover assembly 21, a maximum gap between the portion, accommodated in the first concave portion 2152, of the support member 24 and the side wall surface of the first concave portion 2152 is D2, which satisfies: 0.6 mm ≤ D2 ≤ 4 mm.

D2 represents the maximum gap between the portion, accommodated in the first concave portion 2152, of the support member 24 and the side wall surface of the first concave portion 2152 in the width direction. Because the support member 24 can adaptively move relative to the electrode assembly 22, distances between the two ends of the support member 24 and the corresponding side wall surfaces may be different in the width direction. An example is shown in FIG. 11. The gap between the upper side of the support member 24 and the upper wall of the first concave portion 2152 may be N3, the distance between the lower side of the support member 24 and the lower wall of the first concave portion 2152 may be N4, and N3 may be greater than N4, equal to N4, or less than N4. Here, the expression "in the width direction of the end cover assembly 21, a maximum gap between the portion, accommodated in the first concave portion 2152, of the support member 24 and the side wall surface of the first concave portion 2152" refers to a larger one of N3 and N4.

In the width direction of the end cover assembly 21, a value of the maximum gap between the portion, accommodated in the first concave portion 2152, of the support member 24 and the side wall surface of the first concave portion 2152 may be: D2 = 0.6 mm, 0.8 mm, 1 mm, 1.5 mm, 2 mm, 2.5 mm, 3 mm, 3.5 mm, 4 mm, or the like.

The maximum gap between the portion, accommodated in the first concave portion 2152, of the support member 24 and the side wall surface of the first concave portion 2152 in the width direction of the end cover assembly 21 is within a range of 0.6-4 mm, which can ensure a sufficient space for the movement of the support member 24 and a range required for the adaptive movement thereof, and can ensure that the positions of the support member 24 and the end cover assembly 21 are relatively stable and significant shaking is unlikely to occur. If D2 < 0.6 mm, the range of movement of the support member 24 in the width direction of the end cover assembly 21 is small, and its adaptive ability is poor. If D2 > 4 mm, the range of movement of the support member 24 in the width direction of the end cover assembly 21 is large, and when the battery cell 20 is subjected to vibration, the support member 24 is prone to significant shaking to damage the tab 222.

In some embodiments, the end cover assembly 21 includes an end cover 211 and an insulating member 215, the insulating member 215 is located on a side of the end cover 211 facing the main body 221, and the insulating member 215 is used for insulating the electrode assembly 22 and the end cover 211. The buckle portion 242 is in buckle fit with the insulating member 215.

Through the buckle fit between the support member 24 and the insulating member 215, the existing manufacturing method for the end cover 211 does not need to be changed. Compared with the end cover 211, the insulating member 215 is lower in price and easier to manufacture, which is beneficial to reducing production costs. In addition, the buckle fit between the support member 24 and the insulating member 215 is less likely to cause new problems (such as sealing and insulation problems of the end cover 211) compared with connection between the support member 24 and the end cover 211.

In some embodiments, the end cover 211 is provided with a pressure relief mechanism 214. In the thickness direction of the end cover assembly 21, a first protrusion 2151 protruding towards the electrode assembly 22 is formed on the insulating member 215, and a first avoidance space 2154 for avoiding the pressure relief mechanism 214 is formed in the first protrusion 2151. A second concave portion 24134 is disposed on a side of the support member 24 facing the insulating member 215, and the first protrusion 2151 is at least partially accommodated in the second concave portion 24134.

The first protrusion 2151 is of a protruding structure on the insulating member 215, the first protrusion 2151 protrudes towards the electrode assembly 22, and the position of the first protrusion 2151 corresponds to the position of the pressure relief mechanism 214. The first protrusion 2151 may be partially accommodated in the second concave portion 24134 or fully accommodated in the second concave portion 24134.

A first avoidance space 2154 is formed on a side of the first protrusion 2151 away from the electrode assembly 22, and the first avoidance space 2154 is used for avoiding the pressure relief mechanism 214 to facilitate pressure relief by the pressure relief mechanism 214.

The second concave portion 24134 is of a groove structure disposed on the support member 24. The position of the second concave portion 24134 corresponds to the position of the first protrusion 2151 and corresponds to the position of the pressure relief mechanism 214. Pressure relief holes 24135 penetrating the support member 24 in the thickness direction are formed on a bottom wall of the second concave portion 24134, and gas inside the shell 23 is allowed to pass through the pressure relief holes 24135 and discharged from the pressure relief mechanism 214 to implement pressure relief.

The first protrusion 2151 and the second concave portion 24134 are configured, the first protrusion 2151 is at least partially accommodated in the second concave portion 24134, and the first protrusion 2151 cooperates with the second concave portion 24134, which can limit the support member 24 and prevent the support member 24 from moving within the shell 23.

In some embodiments, there is a gap between the portion, accommodated in the second concave portion 24134, of the first protrusion 2151 and a side wall surface of the second concave portion 24134, and the gap is used for movement of the support member 24 relative to the insulating member 215.

The expression "there is a gap between the portion, accommodated in the second concave portion 24134, of the first protrusion 2151 and a side wall surface of the second concave portion 24134" may be that there is a gap between the portion, accommodated in the second groove, of the first protrusion 2151 and the side wall surface of the second concave portion 24134 in the length direction to allow the support member 24 to move relative to the end cover assembly 21 in the length direction.

The expression "there is a gap between the portion, accommodated in the second concave portion 24134, of the first protrusion 2151 and a side wall surface of the second concave portion 24134" may be that there is a gap between the portion, accommodated in the second groove, of the first protrusion 2151 and the side wall surface of the second concave portion 24134 in the width direction to allow the support member 24 to move relative to the end cover assembly 21 in the width direction.

There is the gap between the portion, accommodated in the second concave portion 24134, of the first protrusion 2151 and the side wall surface of the second concave portion 24134, and the gap enables the support member 24 to move relative to the insulating member 215, thereby achieving adaptive movement of the support member 24 with the shape of the tab 222. For example, when the tab 222 on one side is misaligned with the electrode terminal 213 by welding, the tab 222 on that side or the tab 222 on the other side can push the support member 24 to move relative to the insulating member 215, and the position of the support member 24 is adjusted, so that the support member 24 will not always act on the tab 222, and the tab 222 is unlikely to damage due to stress concentration.

In some embodiments, a maximum gap between the side wall surface of the second concave portion 24134 and a peripheral surface of the first protrusion 2151 is D3, which satisfies: 0.4 mm ≤ D3 ≤ 4 mm.

D3 represents the maximum gap between the side wall surface of the second concave portion 24134 and the peripheral surface of the first protrusion 2151. Because the support member 24 can adaptively move relative to the electrode assembly 22, the gap between the side wall surface of the second concave portion 24134 and the peripheral surface of the first protrusion 2151 may be different at different positions. The expression "the maximum gap between the side wall surface of the second concave portion 24134 and the peripheral surface of the first protrusion 2151" indicates that the gap at that position is greater than or equal to the gap at any other position.

A value of the maximum gap between the side wall surface of the second concave portion 24134 and the peripheral surface of the first protrusion 2151 may be: D1 = 0.4 mm, 0.8 mm, 1 mm, 1.5 mm, 2 mm, 2.5 mm, 3 mm, 3.5 mm, 4 mm, or the like.

The maximum gap between the side wall surface of the second concave portion 24134 and the peripheral surface of the first protrusion 2151 is within a range of 0.4-4 mm, which can ensure a sufficient space for the movement of the support member 24 and a range required for the adaptive movement thereof, and can ensure that the positions of the support member 24 and the insulating member 215 are relatively stable and significant shaking is unlikely to occur. If D2 < 0.4 mm, the range of movement of the support member 24 is small, and its adaptive ability is poor. If D2 > 4 mm, the range of movement of the support member 24 is large, and when the battery cell 20 is subjected to vibration, the support member 24 is prone to significant shaking to damage the tab 222.

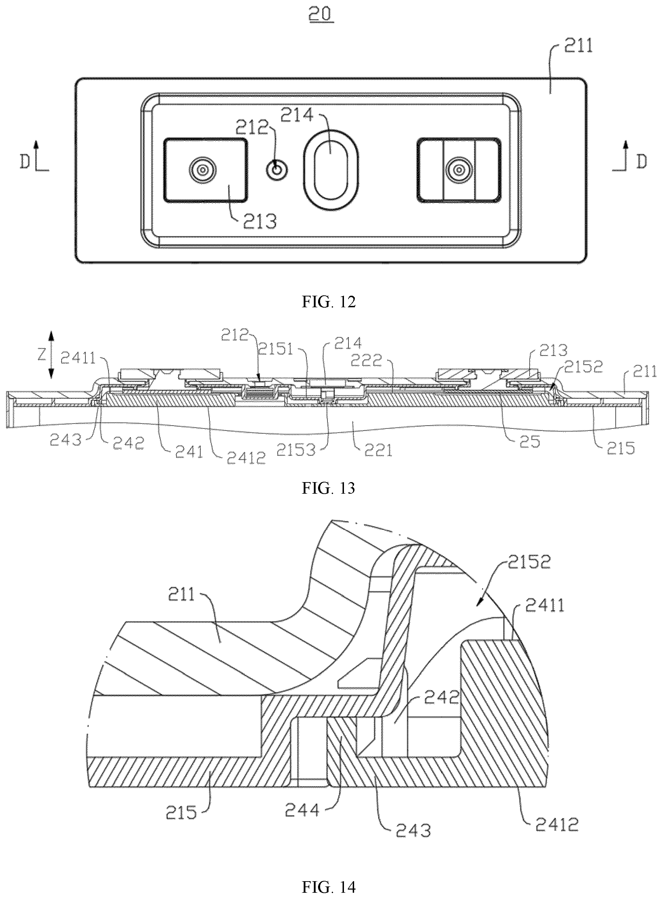

Refer to FIG. 12 and FIG. 13. FIG. 12 is a schematic top view of a battery cell 20 provided by other embodiments of the present application. FIG. 13 is a cross-sectional view taken along line D-D in FIG. 12. In some embodiments, in the thickness direction, a second protrusion 2153 protruding towards the electrode assembly 22 is formed on the first protrusion 2151, and a second avoidance space 2155 for avoiding the pressure relief mechanism 214 is formed in the second protrusion 2153. The second avoidance space 2155 is in communication with the first avoidance space 2154, and the second protrusion 2153 abuts against the bottom wall surface of the second concave portion 24134.

The second protrusion 2153 is of a protruding structure on the first protrusion 2151, the second protrusion 2153 protrudes towards the electrode assembly 22, and the position of the second protrusion 2153 corresponds to the position of the pressure relief mechanism 214. A second avoidance space 2155 is formed on a side of the second protrusion 2153 away from the electrode assembly 22, and the second avoidance space 2155 is in communication with the first avoidance space 2154 for avoiding the pressure relief mechanism 214 to facilitate pressure relief by the pressure relief mechanism 214.

The expression "the second protrusion 2153 abuts against the bottom wall surface of the second concave portion 24134" indicates that a surface of the second protrusion 2153 facing the electrode assembly 22 is in contact with the bottom wall surface of the second concave portion 24134, and there may be or may not be force between the two.

The second protrusion 2153 protruding towards the electrode assembly 22 is formed on the first protrusion 2151, the second avoidance space 2155 is formed in the second protrusion 2153, the second avoidance space 2155 is in communication with the first avoidance space 2154, and the insulating member 215 has a relatively large avoidance space for avoiding the pressure relief mechanism 214 to facilitate pressure relief by the pressure relief mechanism 214, thereby improving the safety of the battery cell 20. In addition, the second protrusion 2153 abuts against the bottom wall surface of the second concave portion 24134, which also limits the movement of the support member 24 from the main body 221 to the end cover assembly 21, thereby preventing the support body 241 from moving to cause damage to the electrode assembly 22.

Refer to FIG. 14. FIG. 14 is an enlarged view of position C in FIG. 6. In some embodiments, in the thickness direction of the end cover assembly 21, the distance between a surface of the end cover assembly 21 facing the main body 221 and the second surface 2412 is H, which satisfies: H ≤ 0.5 mm.

H refers to the distance between the surface of the end cover assembly 21 facing the main body 221 and the second surface 2412. In the thickness direction of the end cover assembly 21, the surface of the end cover assembly 21 facing the main body 221, in a direction from the end cover assembly 21 to the main body 221, may be extend beyond the second surface 2412 or be flush with the second surface 2412, or the second surface 2412, in the direction from the end cover assembly 21 to the main body 221, may be extended beyond the surface of the end cover assembly 21 facing the main body 221.

In the thickness direction of the end cover assembly 21, a value of the distance between the surface of the end cover assembly 21 facing the main body 221 and the second surface 2412 may be: H = 0, 0.1 mm, 0.2 mm, 0.25 mm, 0.3 mm, 0.35 mm, 0.4 mm, 0.45 mm, 0.5 mm, or the like.

By limiting the distance between the surface of the end cover assembly 21 facing the main body 221 and the second surface 2412 in the thickness direction of the end cover assembly 21 within 0.5 mm, the internal space of the shell 23 can be fully used and the energy density of the battery cell 20 can be increased. If H > 0.5 mm, it indicates that in the direction from the main body 221 to the end cover assembly 21, the surface of the end cover assembly 21 facing the main body 221 extends beyond the second surface 2412 by a relatively long distance, or the second surface 2412 extends beyond the surface of the end cover assembly 21 facing the main body 221 by a relatively long distance, so that a lot of space in the shell 23 is wasted, which is not conducive to the increase in the energy density of the battery cell 20.

In some embodiments, the surface of the end cover assembly 21 facing the main body 221 is flush with the second surface 2412.

The expression "the surface of the end cover assembly 21 facing the main body 221 is flush with the second surface 2412" may be understood as, in the thickness direction, the distance between the surface of the end cover assembly 21 facing the main body 221 and the main body 221 is a first distance, the distance between the second surface 2412 and the main body 221 is a second distance, and the first distance is equal to the second distance.

By aligning the surface of the end cover assembly facing the main body 221 with the second surface 2412, the internal space of the shell 23 can be fully used and the energy density of the battery cell 20 can be increased.

An embodiment of the present application further provides a battery 100. The battery 100 includes a box 10 and the foregoing battery cell 20, and the battery cell 20 is accommodated in the box 10.

In some embodiments, the end cover assembly 21 is disposed on a side, close to a bottom wall of the box 10, of the battery cell 20.

The bottom wall of the box 10 is a wall of the box 10 opposite to an open end of the box 10.

The end cover assembly 21 is disposed on the side, close to the bottom wall of the box 10, of the battery cell 20, that is, the battery cell 20 is inverted inside the box 10.

An embodiment of the present application further provides an electrical device. The electrical device includes the foregoing battery 100, where the battery 100 is used for providing electrical energy.

According to some embodiments of the present application, refer to FIGs. 3 to 14.

An embodiment of the present application provides a battery cell 20. The battery cell 20 includes a shell 23, an electrode assembly 22, an end cover assembly 21, and a support member 24. The shell 23 has an opening. The shell 23 has an opening. The electrode assembly 22 has a main body 221 and a tab 222 protruding from the main body 221, and the electrode assembly 22 is accommodated in the shell 23. The end cover assembly 21 seals the opening. The support member 24 is located inside the shell 23. The support member 24 includes a support body 241 and a buckle portion 242, and the tab 222 is bent around the support body 241. In a thickness direction of the end cover assembly 21, the support body 241 has a first surface 2411 facing the end cover assembly 21 and a second surface 2412 away from the end cover assembly 21, and the second surface 2412 abuts against the main body 221. The buckle portion 242 is disposed on the support body 241, and the buckle portion 242 is in buckle fit with the end cover assembly 21. The buckle portion 242 is located between the first surface 2411 and the second surface 2412.

The support member 24 is disposed between the end cover assembly 21 and the main body 221 of the battery cell 20, and in the scenario where the battery cell is inverted, the support member 241 can support the electrode assembly 22, so that the gravity of the main body 221 of the electrode assembly 22 is less prone to transmission to the tab 222 to cause bifurcation and insertion of the tab 222, thereby improving the safety of the battery cell 20. The support body 241 is connected to the end cover assembly 21 through the buckle portion 242, so that the support member 24 will not move up and down inside the shell 23 and will not hit the electrode assembly 22 to damage the electrode assembly 22. The buckle portion 242 is disposed between the first surface 2411 and the second surface 2412 to reduce volume occupation in the thickness direction of the end cover assembly 21, which is beneficial to increasing an energy density of the battery cell 20. Further, the buckle portion 242 does not extend beyond the first surface 2411 or the second surface 2412, so that the buckle portion 242 is less susceptible to external force and fracture in a production process. When materials are piled, a plurality of support members 24 are laminated, and the buckle portion 242 does not exceed beyond the first surface 2411 or the second surface 2412, so that the first surface 2411 of one support member 24 can fit onto the second surface 2412 of the other support member 24. In this case, the contact area of two support members 24 is larger, which is conducive to stably piling the materials. In addition, as the buckle portion 242 is disposed between the first surface 2411 and the second surface 2412, compared with a situation that the buckle portion 242 extends beyond the first surface 2411 or the second surface 2412, the two adjacent support members 24 are unlikely to hook each other during piling, and the other support member 24 will not be pulled when one support member 24 is fetched, thereby improving production safety and efficiency.

The support body 241 has a first end and a second end that are opposite in a length direction, and the buckle portions 242 are disposed at the first end and the second end. A first blocking member 243 is further disposed at the first end, and the first blocking member 243 extends beyond the buckle portion 242 disposed at the first end in the direction from the second end to the first end. A second blocking member is further disposed at the second end, and the second blocking member extends beyond the buckle portion 242 disposed at the second end in the direction from the first end to the second end. The first blocking member 243 is disposed at the first end, and the first blocking member 243 extends beyond the buckle portion 242 disposed at the first convex portion in the direction from the second end to the first end, so that when the support member 24 collides with other components in the direction from the second end to the first end, the first blocking member 243 is prone to collision with other components first, which can reduce the possibility of collision with the buckle portion 242 to some extent and reduce the possibility of damage to the buckle portion 242. Similarly, the second blocking member is disposed at the second end, and the second blocking member extends beyond the buckle portion 242 disposed on the second convex portion in the direction from the first end to the second end, so that when the support member 24 collides with other components in the direction from the first end to the second end, the second blocking member is prone to collision with other components first, which can reduce the possibility of collision with the buckle portion 242 to some extent and reduce the possibility of damage to the buckle portion 242.

Described above are merely preferred embodiments of the present application, and the present application is not limited thereto. Various modifications and variations may be made to the present application for those skilled in the art. Any modifications, equivalent substitutions, improvements, and the like made within the spirit and principle of the present application shall fall within the protection scope of the present application.

## Claims

1. A battery cell, comprising:
a shell, having an opening;
an electrode assembly, having a main body and a tab protruding from the main body, wherein the electrode assembly is accommodated in the shell;
an end cover assembly, closing the opening; and
a support member, located between the end cover assembly and the main body, wherein the support member comprises a support body and a buckle portion, the support body has a first surface facing the end cover assembly and a second surface facing away from the end cover assembly in a thickness direction of the end cover assembly, the buckle portion is disposed on the support body, the buckle portion is in buckle fit with the end cover assembly, and the buckle portion is located between the first surface and the second surface.

2. The battery cell according to claim 1, wherein the second surface abuts against the main body.

3. The battery cell according to claim 1, wherein the tab is bent around the support body.

4. The battery cell according to any one of claims 1-3, wherein the support body comprises a body portion and a protruding portion, the tab is bent around the body portion, the protruding portion protrudes from a side of the body portion away from the end cover assembly in the thickness direction, a surface of the protruding portion away from the end cover assembly is the second surface, and a surface of the body portion facing the end cover assembly is the first surface.

5. The battery cell according to claim 4, wherein the protruding portion comprises a main convex portion and side convex portions, a plurality of the side convex portions are disposed on at least one side of the main convex portion in a width direction of the end cover assembly, a plurality of the side convex portions are arranged at intervals in a length direction of the end cover assembly, and an accommodating space for accommodating the tab is formed between two adjacent side convex portions.

6. The battery cell according to claim 5, wherein the buckle portion is disposed on at least one of the side convex portions.

7. The battery cell according to claim 6, wherein the main convex portion has a first end and a second end that are opposite to each other in the length direction, and the side convex portion is disposed at the first end and/or the second end; and
the side convex portion located at the first end and/or the second end is provided with the buckle portion.

8. The battery cell according to claim 7, wherein:
the side convex portion at the first end is a first convex portion, and the side convex portion at the second end is a second convex portion;
a first blocking member is further disposed at the first end, and the first blocking member extends beyond the buckle portion disposed on the first convex portion, in a direction from the second end to the first end; and/or
a second blocking member is further disposed at the second end, and the second blocking member extends beyond the buckle portion disposed on the second convex portion, in a direction from the first end to the second end.

9. The battery cell according to claim 8, wherein an abutting portion is disposed on the first blocking member and/or the second blocking member, and the abutting portion abuts against the end cover assembly in the thickness direction.

10. The battery cell according to any one of claims 5-9, wherein a plurality of the side convex portions are disposed on two sides of the main convex portion in the width direction.

11. The battery cell according to claim 1, wherein the buckle portion is disposed on at least one end of the support body in a length direction of the end cover assembly.

12. The battery cell according to claim 11, wherein:
the support body has a first end and a second end that are opposite to each other in the length direction, and the buckle portions are disposed at the first end and the second end;
a first blocking member is further disposed at the first end, and the first blocking member extends beyond the buckle portion disposed at the first end, in a direction from the second end to the first end; and/or
a second blocking member is further disposed at the second end, and the second blocking member extends beyond the buckle portion disposed at the second end, in a direction from the first end to the second end.

13. The battery cell according to any one of claims 1-12, wherein a first concave portion is disposed on a side of the end cover assembly facing the electrode assembly, and the support member is at least partially accommodated in the first concave portion.

14. The battery cell according to claim 13, wherein a gap is formed between a portion of the support member accommodated in the first concave portion and a side wall surface of the first concave portion, and the gap is configured for movement of the support member relative to the end cover assembly.

15. The battery cell according to claim 13 or 14, wherein the support member is fully accommodated in the first concave portion.

16. The battery cell according to any one of claims 13-15, wherein in a length direction of the end cover assembly, a maximum gap between a portion of the support member accommodated in the first concave portion and the side wall surface of the first concave portion is D1, which satisfies: 0.2 mm ≤ D1 ≤ 4 mm.

17. The battery cell according to any one of claims 13-16, wherein in a width direction of the end cover assembly, a maximum gap between a portion of the support member accommodated in the first concave portion and the side wall surface of the first concave portion is D2, which satisfies: 0.6 mm ≤ D2 ≤ 4 mm.

18. The battery cell according to any one of claims 1-17, wherein the end cover assembly comprises an end cover and an insulating member, the insulating member is located on a side of the end cover facing the main body, and the insulating member is configured for insulating the electrode assembly and the end cover; and
the buckle portion is in buckle fit with the insulating member.

19. The battery cell according to claim 18, wherein the end cover is provided with a pressure relief mechanism, a first protrusion protruding towards the electrode assembly is formed on the insulating member in the thickness direction of the end cover assembly, a first avoidance space for avoiding the pressure relief mechanism is formed in the first protrusion, a second concave portion is disposed on a side of the support member facing the insulating member, and the first protrusion is at least partially accommodated in the second concave portion.

20. The battery cell according to claim 19, wherein there is a gap between a portion of the first protrusion accommodated in the second concave portion and a side wall surface of the second concave portion, and the gap is configured for movement of the support member relative to the insulating member.

21. The battery cell according to claim 20, wherein a maximum gap between the side wall surface of the second concave portion and a peripheral surface of the first protrusion is D3, which satisfies: 0.4 mm ≤ D3 ≤ 4 mm.

22. The battery cell according to any one of claims 19-21, wherein in the thickness direction, a second protrusion protruding towards the electrode assembly is formed on the first protrusion, a second avoidance space for avoiding the pressure relief mechanism is formed in the second protrusion, the second avoidance space is in communication with the first avoidance space, and the second protrusion abuts against a bottom wall surface of the second concave portion.

23. The battery cell according to any one of claims 1-22, wherein in the thickness direction of the end cover assembly, the distance between a surface of the end cover assembly facing the main body and the second surface is H, which satisfies: H ≤ 0.5 mm.

24. The battery cell according to claim 23, wherein the surface of the end cover assembly facing the main body is flush with the second surface.

25. A battery, comprising:
a box; and
the battery cell according to any one of claims 1-24, wherein the battery cell is accommodated in the box.

26. The battery according to claim 25, wherein the end cover assembly is disposed on a side of the battery cell close to a bottom wall of the box.

27. An electrical device, comprising the battery according to any one of claims 25 and 26, wherein the battery is configured for providing electrical energy.
